# EUROPEAN PATENT SPECIFICATION

(11) **EP 3 187 397 B1**
(45) Date of publication and mention of the grant of the patent: **22.08.2018**
(21) Application number: 16206903.3
(22) Date of filing: 26.12.2016
(51) Int. Cl.: B62D 13/06, B62D 1/00, B62D 13/00, B62D 13/02

(54) **AUTOMATIC ALIGNMENT SYSTEM WITH WARNING LIGHT**
AUTOMATISCHES AUSRICHTUNGSSYSTEM MIT WARNLEUCHTE
SYSTÈME D'ALIGNEMENT AUTOMATIQUE AU MOYEN D'UNE LUMIÈRE D'AVERTISSEMENT

(30) Priority: 31.12.2015 TR 201517646
(43) Date of publication of application: 05.07.2017
(73) Proprietor: Tirsan Treyler Sanayi Ve Ticaret Anonim Sirketi, 54580 Sakarya (TR)
(72) Inventor: ÜLGENTÜRK, Berkay, 54580 Sakarya (TR); HASÇEL K, afak, 54580 Sakarya (TR)
(74) Representative: Yamankaradeniz, Kemal

(56) References cited:
- EP-A1- 0 484 668
- EP-B1- 2 917 070
- FR-A1- 2 666 295

## Description

### TECHNICAL FIELD

The invention concerns a system that provides controls of the angle between the tower/trailer and the rotation way of the wheels, and provides the performance of the automatic alignment process in accordance with these controls in vehicles that are used in heavy load carriage, and have hydro-mechanical steering system.

### PREVIOUS TECHNIQUE

Automatic alignment systems in the current applications consist of an electronic control unit, angle sensors, and a remote control. Angle sensors measures the angle between the tower and the trailer, and the wheel angles. Electronic control unit controls the hydraulic steering to steer rear wheels to the necessary, optimum angle in accordance with the information received from the angle sensors. Lacks and insufficiencies of this existing application are as follows:
- Automatic alignment system performed with electronic control unit and analog output angle sensors is expensive in terms of the cost.
- Some electronic control units may not be durable against; vibration, cold and hot weather conditions, dust, and water. And electronic control units manufactured as durable to such environmentally deteriorating factors are expensive.
- Use of automatic alignment system performed by using an electronic control unit is perceived as complex and confusing by the trailer drivers.
- If algorithm of the software inside the electronic control unit does not have a closed-cycle control structure, correctness and stability of the automatic alignment system vary.
Document FR 2666295 A1 mentions a device which is using for checking alignment of guiding wheels of semitrailers or trailers and this device involves sensors, trigger members, lamps, an audible alarm, and a switch. If this document is examined in detail, those differences can be noticed easily; using more sensor for checking alignment thereby obtaining more accurate measurement, possibility of the remote control with wire or wireless so, not from the cabin, automatic communication with EBS modul so, not manual on/off for using device and an electric control circuit.

### SHORT EXPLANATION OF THE INVENTION

Main purpose of the invention is to provide an automatic alignment in vehicles that are used in heavy load carriage, and have hydro-mechanical steering system.

In order to provide for all purposes that are above mentioned and will emerge from the detailed explanation below, this invention concerns an automatic alignment system that provides controls of the angle between the (A) tower / trailer (B) and the rotation way of the wheels, and provides the performance of the automatic alignment process in accordance with these controls in vehicles that are used in heavy load carriage, and have hydro-mechanical steering system. The concern system includes;
- one right front inductive sensor and one left front inductive sensor, which are assembled on the front steering center,
- one right rear inductive sensor and one left rear inductive sensor, which are assembled on the rear steering center,
- tower direction of rotation detection part, which is linked to the front steering center so that it moves according the to the steering action of the tower in respect to the trailer, and that when the tower and the trailer are aligned, it will be sensed by the right front inductive sensor and the left front inductive sensor,
- wheel direction of rotation detection part, which is linked to the rear steering center so that it moves according to the steering action of the rear wheels, and that when the rear wheels are aligned, it will be sensed by both inductive sensors, and when wheels are steered to a direction, it will be sensed by the inductive sensor of the steering direction
- an electronic control circuit that provides the performance of automatic alignment by controlling the hydro-mechanical steering system in accordance with the signals received from the mentioned inductive sensors,
- and a wired or wireless remote control with a lighted warning, which provides commands to perform left steering, right steering, and automatic alignment functions by working connectedly with the electric control circuit.

And the automatic alignment method, which is performed with the automatic alignment system subject to this invention provides;
- Transmittance of the automatic alignment command given by the remote control to the electric control circuit,
- control of the right front inductive sensor and left front inductive sensor in order that electrical control circuit detects the angle between the tower and the trailer,
- Detection of the fact that the angle between the tower and the trailer is zero, meaning that the tower and the trailer are aligned if both right front inductive sensor and left front inductive sensor detect the tower direction of rotation detection part,
- control of right rear inductive sensor and left rear inductive sensor in order that the steered direction of the electric control circuit is detected,
- control of the hydraulic system in order that the electric control circuit detects the steering direction by detecting the inductive sensor detecting the wheel steering direction detection part, and that a steering towards the direction of other inductive sensor is performed,
- that the electric control circuit maintains the steering action until the right rear inductive sensor and left rear inductive sensor are both active,
- that the electric control circuit stops the alignment action until the right rear inductive sensor and left rear inductive sensor are both active

In the system subject to this invention, material cost with the use of an electronic control circuit consisting of relays used in electric circuits and digital output inductive sensors instead of electronic controller unit and analog signal output angle sensors is considered.

In the automatic alignment system subject to this invention, there is a warning system with a LED light. There are LED lamps showing the tendency between the tower and the trailer, assembled on the steering drag link in a position visible by the driver, and also Led lamps on the remote control, which shows the steering direction of the wheels.

The automatic aligning system with a lighted warning, which is subject to this invention, is a system with an easy use for trailer drivers.

The automatic aligning system with a lighted warning, which is subject to this invention, works more correct and stable compared to the electrically controlled system.

This invention must be considered together with the figures, explanations of which are made below, in order that it is structured, and its advantages with additional elements are comprehended in a most effective way.

### SHORT EXPLANATIONS OF THE FIGURES

Figure 1 is the schematic view of the automatic alignment system subject to this invention.
Figure 2 is the top view of the mechanical control system assembled on the trailer.
Figure 3 is the top view of the front steering mechanical control mechanism assembled on the front steering center.
Figure 4 is the top view, and detailed bottom view of the rear steering mechanism assembled to the rear steering center.
Figure 5 is the figurative view of the wired remote control with a lighted warning.
Figure 6 is the view of the front steering mechanical control mechanism when the tower is steered towards right.
Figure 7 is the view of the front steering mechanical control mechanism when the tower is steered towards left.
Figure 8 is the view of the rear steering mechanical control mechanism when wheels are steered towards right.
Figure 9 is the view of the rear steering mechanical control mechanism when wheels are steered towards left.

### REFERENCE NUMBERS

10 Front steering mechanical control mechanism
   11 Tower direction of rotation detection part
      111 Right extension
      112 Left extension
   12 Front steering center connection part
   13 Front steering center
20 Rear steering mechanical control mechanism
   21 Wheel direction of steering detection part
   22 Rear steering center connection part
   23 Rear steering center
30 Right front inductive sensor
30' Left front inductive sensor
40 Right rear inductive sensor
40' Left rear inductive sensor
50 Right Indicator Lamp
50' Left Indicator Lamp
60 Electric control circuit
70 Remote Control
   71 Right steering button
   72 Left steering button
   73 Automatic alignment button
   74 Emergency stop button
   75 Right sensor lamp
   76 Left sensor lamp
A: Tower
B: Trailer

### DETAILED EXPLANATION OF THE INVENTION

The invention concerns an automatic alignment system that provides controls of the angle between the tower (A) / trailer (B) and the rotation way of the wheels, and provides the performance of the automatic alignment process in accordance with these controls in vehicles that are used in heavy load carriage, and have hydro-mechanical steering system. In this detailed explanation, innovation subject to this invention is explained with examples that will not cause any limiting effects on better comprehension of the topic.

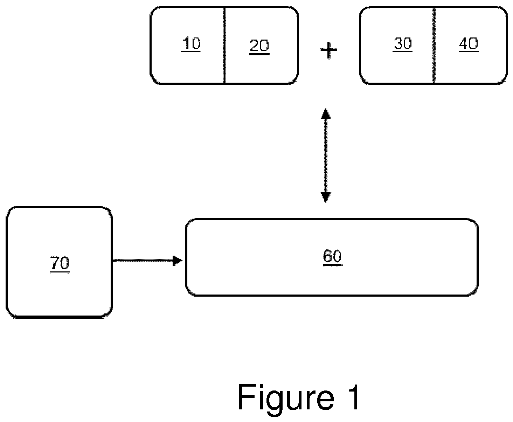

Figure 1 is the schematic view of the automatic alignment system subject to this invention. Automatic alignment system, essentially, includes;
- Front steering mechanical control mechanism (10) and Rear steering mechanical control mechanism (20),
- a mechanical control system assembled on front and rear steering centers (13, 23) in order to provide control of the direction of rotation of the wheels, and the alignment situation between the tower (A) / trailer (B),
- Inductive sensors, (30, 30', 40, 40') assembled on the front and rear steering centers (13, 23) along with the mechanical control system, generating digital signals regarding the mechanical control system,
- an electronic control circuit (60) that provides the performance of automatic alignment by controlling the hydro-mechanical steering system in accordance with the signals received from the mentioned inductive sensors (30, 30', 40,40'),
- and a wired or wireless remote control (70) with a light warning, which provides commands to perform left steering, right steering, and automatic alignment functions by working connectedly with the electric control circuit (60).

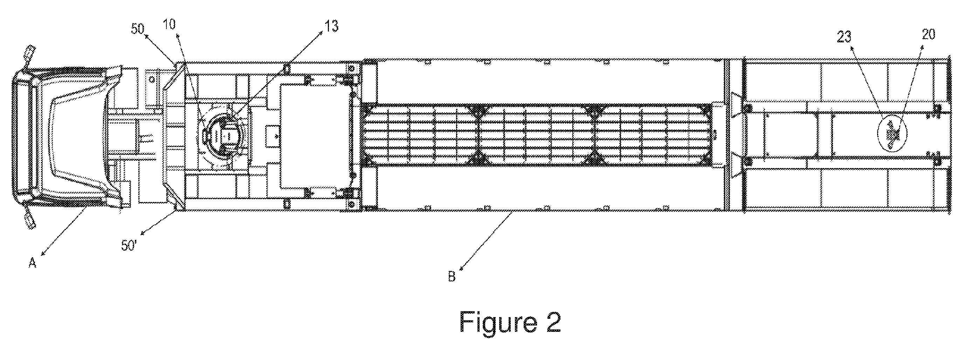

Figure 2 is the view of the mentioned mechanical control system assembled on a trailer (B). Mechanical control system, essentially, includes;
- a front steering mechanical control mechanism (10) detecting the direction of rotation of the tower (A) in respect to the trailer (B) in the front steering system,
- a rear steering control mechanism (20) detecting the direction of rotation of the wheels in the rear steering system,

. Front steering mechanical control mechanism (10) elements are connected to the front steering center (13), and rear steering mechanical control mechanism (20) elements are connected to the rear steering center (23) connected to the rear wheels.

Right and left front inductive sensors (30, 30') are assembled on the front steering center (13); and right and left rear inductive sensors (40, 40') are assembled on the rear steering center (23), along with the mechanical control system. Inductive sensors (30, 30', 40, 40') generate digital signals regarding the mechanical control and transmit these signals to the electric control circuit (60).

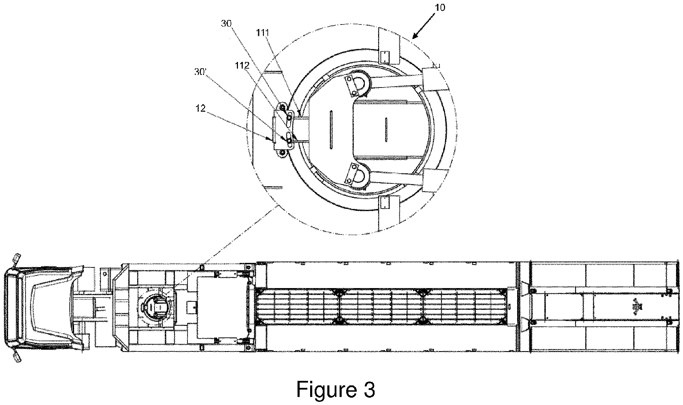

Figure 3 is the top view of the front steering mechanical control mechanism (10) assembled on the front steering center (13). According to this, front steering mechanical control mechanism (10) includes;
- One front steering center connection part (12), which provides the assembly of at least two inductive sensors (30, 30') on the front steering center (13),
- Tower direction of rotation detection part (11), which is linked to the front steering center (13) so that it will be sensed by the inductive sensor (30, 30') when the tower (A) and the trailer (B) are aligned, and that it will move in accordance with the steering action of the tower (A) in respect to the trailer (B),

Tower direction of rotation detection (11) part contains a right extension (111) and a left extension (112). When the angle between the tower (A) and the trailer (B) is zero as in Figure 2, right front inductive sensor (30) senses the right extension (111), and left rear inductive sensor (30') senses the left extension (112). When the tower (A) is steered towards right or left in respect to the trailer (B), right extension (111) leaves the sensing area of the right front inductive sensor (30); and left extension (112) leaves the sensing area of the left front inductive sensor (30').

There are the right indicator lamp (50), receiving signal from the right front inductive sensor (30), and the left indicator lamp (50'), receiving signal from the left front inductive sensor (30') in the front side of the trailer (B) for informing the driver. Since the signal reception from inductive sensors (30, 30') stop when the tower direction of rotation detection part (11) moves, indicator lamps (50, 50') go off.

First condition for the automatic alignment is that both inductive sensors (30, 30') sense the tower direction of rotation detection part (11), namely the angle between the tower (A) and the trailer (B) is zero. In this situation, both right indicator lamp (50) and left indicator lamp (50') are on.

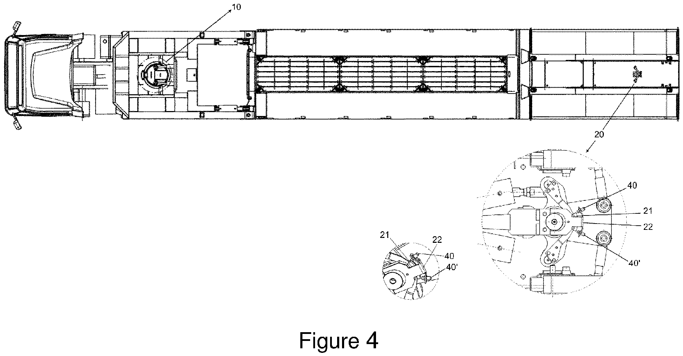

Figure 4 is the top view of the rear steering mechanical control mechanism (20) assembled on the rear steering center (23). According to this, rear steering mechanical control mechanism (20) includes;
- one rear steering center connection part (22), which provides the assembly of at least two inductive sensors (40, 40') on the rear steering center (23),
- wheel direction of steering detection part (21), which is linked to the rear steering center (23) so that it moves according to the steering action of the rear wheels, and that when the rear wheels are aligned, it will be sensed by both inductive sensors (40, 40'), and when wheels are steered to a direction, it will be sensed by the inductive sensor of the steering direction (40, 40').

When rear wheels are aligned as in figure 4, both inductive sensors (40, 40') can sense the wheel direction of steering detection part (21). When rear wheels are steered towards a direction, the wheel direction of steering detection part (21), connected to the rear steering center (23), must move towards the same direction by revolving around its center. In this position, the wheel direction of steering detection part (21) must be within the sensing area of only the inductive sensor in the steered direction (40, 40'). In order for this function to be provided, wheel direction of steering detection part (21) has been designed as a part in semi lunar form.

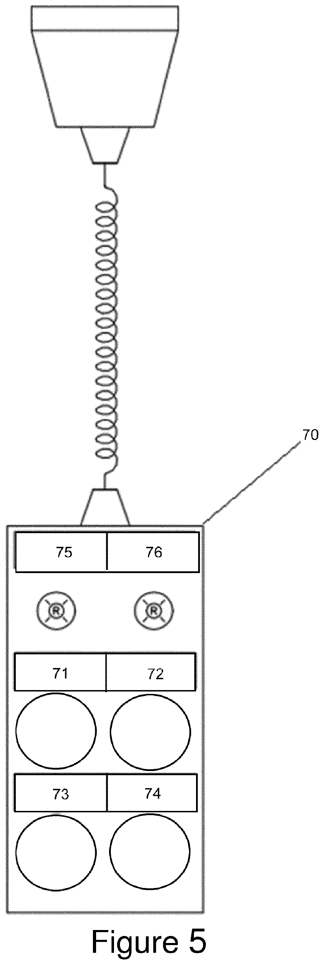

Figure 5 is the schematic view of the wired or wireless remote control (70) with a lighted warning, which provides giving commands to the electric control circuit (60) for performing left steering, right steering, and automatic aligning functions. There is a right steering button (71), a left steering button (72), an automatic aligning button (73), and an emergency stop button (74) on the remote control (70). There are two lamps on the remote control (70), which activate according to direction of rotation of the rear wheels. One of the lamps is the right sensor lamp (75), and it communicates with the right rear inductive sensor (40), which monitors position of the right wheels. The other lamp is the left sensor lamp (76), and it communicates with the left rear inductive sensor (40'), which monitors position of the left wheels.

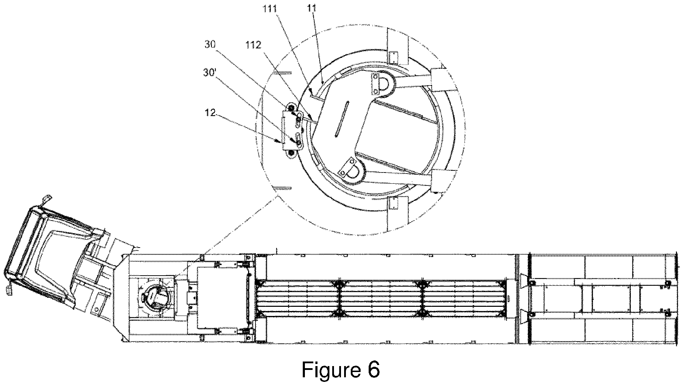

Figure 6 is the view of the front steering mechanical control mechanism (10) when the tower (A) is steered towards right. According to this, when the tower (A) moves towards right, tower direction of rotation detection part (11) also moves towards the same direction. As a result of this movement, right extension (111) leaves the sensing area of the right front inductive sensor (30); and left extension (112) leaves the sensing area of the left front inductive sensor (30'). Right indicator lamp (50) and left indicator lamp (50') go off as a result. In this situation, tower (A) is moved towards left, so that the tower (A) and the trailer (B) are aligned. As a result of movement of the tower (A) towards left, right extension (111) enters the sensing area of the right front inductive sensor (30); and left extension (112) enters the sensing area of the left front inductive sensor (30'). Both inductive sensors (30, 30') send signals to the electric control circuit (60) when they sense the tower direction of rotation detection part (11). And the electric control circuit (60) powers the right indicator lamp (50) and the left indicator lamp (50').

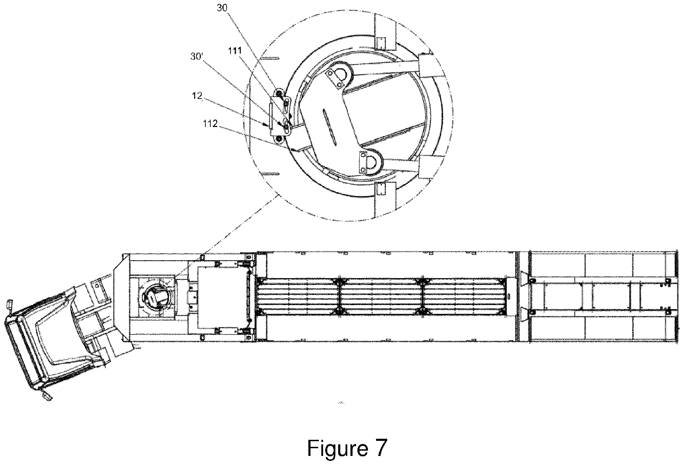

Figure 7 is the view of the front steering mechanical control mechanism (10) when the tower (A) is steered towards left. According to this, when the tower (A) moves towards left, tower direction of rotation detection part (11) also moves towards the same direction. As a result of this movement, left extension (111) leaves the sensing area of the left front inductive sensor (30); and right extension (112) leaves the sensing area of the right front inductive sensor (30). Right indicator lamp (50) and left indicator lamp (50') go off as a result. In this situation, tower (A) is moved towards right, so that the tower (A) and the trailer (B) are aligned. As a result of movement of the tower (A) towards right, right extension (111) enters the sensing area of the right front inductive sensor (30); and left extension (112) enters the sensing area of the left front inductive sensor (30'). Both inductive sensors (30, 30') send signals to the electric control circuit (60) when they sense the tower direction of rotation detection part (11). And the electric control circuit (60) powers the right indicator lamp (50) and the left indicator lamp (50').

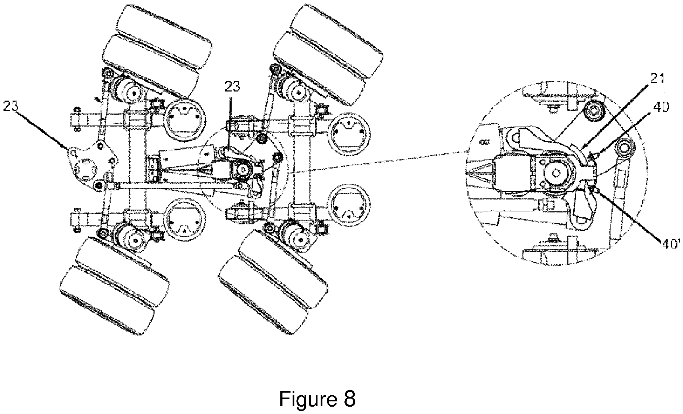

Figure 8 is the view of the rear steering mechanical control mechanism (20) when wheels are steered towards right. Right steering button (71) on the remote control (70) must be pushed in order for the wheels to steer towards right automatically. Electrical control circuit (60) adds the rear steering system to the circuit according to the command received from the remote control (70). When wheels are rotated towards right, the semi lunar wheel direction of steering detection part (21) connected with the rear steering center (23) moves counter clock-wise. As a result of this movement, wheel direction of steering detection part (21) leaves the sensing area of the left rear sensor (40') and can only be sensed by the right rear sensor (40). And the electric control circuit (60) powers the right sensor lamp (75) on the remote control accordingly.

When the automatic alignment button (71) on the remote control (70) is pushed when the wheels are previously steered towards right, the electric control circuit (60), receiving the command, controls the situations of right front inductive sensor (30) and left front inductive sensor (30'). If both inductive sensors (30, 30') are in a sensing situation, the electric control circuit (60) runs the rear steering systems by generating a signal to rotate the wheels towards left. With the rotation of the wheels towards left, wheel direction of steering detection part (21) rotates clock-wise. This movement continues until the wheel direction of steering detection part (21) enters back to the sensing area of the left rear inductive sensor (40'). When right rear inductive sensor (40) and left rear inductive sensor (40') sense together again, electric control circuit (60) stops the steering of the wheels automatically, and powers the right sensor lamp (75) and the left sensor lamp (76) on the remote control (70).

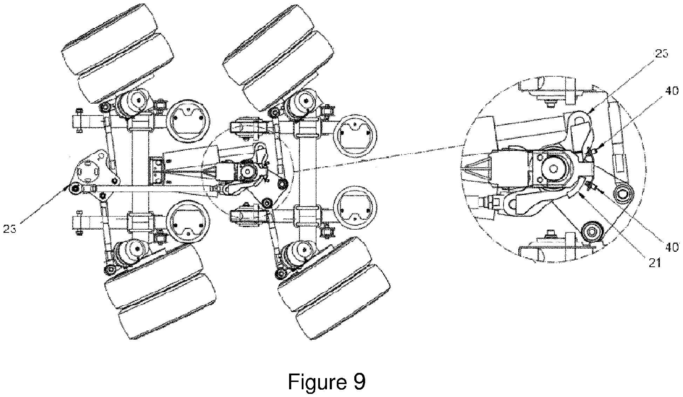

Figure 9 is the view of the rear steering mechanical control mechanism (20) when wheels are steered towards left. Right steering button (72) on the remote control (70) must be pushed in order for the wheels to steer towards left automatically. Electrical control circuit (60) adds the rear steering system to the circuit according to the command received from the remote control (70). When wheels are rotated towards left, the semi lunar wheel direction of steering detection part (21) connected with the rear steering center (23) moves clock-wise. As a result of this movement, wheel direction of steering detection part (21) leaves the sensing area of the right rear sensor (40) and can only be sensed by the left rear sensor (40'). And the electric control circuit (60) powers the left sensor lamp (76) on the remote control accordingly.

When the automatic alignment button (73) on the remote control (70) is pushed when the wheels are previously steered towards left, the electric control circuit (60), receiving the command, controls the situations of right front inductive sensor (30) and left front inductive sensor (30'). If both inductive sensors (30, 30') are in a sensing situation, the electric control circuit (60) runs the rear steering systems by generating a signal to rotate the wheels towards right. With the rotation of the wheels towards right, wheel direction of steering detection part (21) rotates counter clock-wise. This movement continues until the wheel direction of steering detection part (21) enters back to the sensing area of the right rear inductive sensor (40'). When right rear inductive sensor (40) and left rear inductive sensor (40') sense together again, electric control circuit (60) stops the steering of the wheels automatically, and powers the right sensor lamp (75) and the left sensor lamp (76) on the remote control (70).

In speeds faster than 15 km/h, speed signal information is picked up through the EBS modulator of trailers and sent to the electric control circuit (60). Electric control circuit (60), which receives the signal, deactivates the right steering button (71), left steering button (72) and the automatic alignment button (73) on the remote control (70).

A command signal that will deactivate all electrical steering functions is sent by the electric control circuit (60) when the emergency stop button (74) on the remote control (70) is pushed.

In consideration of the information given above, within the scope of the invention, automatic aligning process works as follows: firstly, the angle between the tower (a) and the trailer (B) must be zero in order for the automatic alignment process to be performed. When the angle between the tower (A) and the trailer (B) is zero, right indicator lamp (50) and left indicator lamp (50') go on. According to this, trailer driver must adjust position of the tower (A) in respect to the trailer (B) until both indicator lamps (50, 50') are activated. After these it can be proceeded with the automatic alignment process by pushing on the automatic alignment button (73) on the remote control (70). When the automatic alignment command given from the remote control (70) is transmitted to the electric control circuit (60), electric control circuit (60) firstly controls the situations of right and left front inductive sensors (30, 30'). If both inductive sensors (30, 30') are active, namely if inductive sensors (30, 30') sense the wheel direction of steering detection part (21), it is understood that the tower (A) is in a straight position in respect to the trailer (B). Electric control circuit (60) controls the situations of the right and left rear inductive sensors (40, 40'). As a result of the control, activated inductive sensor of the two (40, 40'), and connectedly, steered rotation side of the wheels are determined. After this, electric control circuit (60) logically decides to make a steering towards the inactivated inductive sensor (40, 40'), and powers the coil of the related direction valve through the hydraulic system. According to this, rear wheels and also wheel direction of steering detection part (21) rotate as well. When the wheel direction of steering detection part (21) can be sensed by both inductive sensors (40, 40'), electric control circuit (60) stops the alignment action. As a result of this action, wheels of the trailer (B) are realigned in respect to the tendency of the tower (A), and trailer (B) is ready for driving again.

## Claims

1. Automatic alignment system providing controls of the angle between the tower (A) / trailer (B) and the rotation way of the wheels, providing the performance of the automatic alignment process in accordance with these controls in vehicles that are used in heavy load carriage, and having a hydro-mechanical steering system,
• a tower direction of rotation detection part (11), which is linked to the front steering center (13) so that it moves according the to the steering action of the tower (A) in respect to the trailer (B), and that when the tower (A) and the trailer (B) are aligned, it will be sensed by the right front inductive sensor (30) and the left front inductive sensor (30'),
• a wheel direction of steering detection part (21), which is linked to the rear steering center (23) so that it moves according to the steering action of the rear wheels, and that when the rear wheels are aligned, it will be sensed by the right rear inductive sensor (40) and the left rear inductive sensor (40'), and when wheels are steered to a direction, it will be sensed by the inductive sensor of the steering direction (40, 40'), and
• an electronic control circuit (60) that provides the performance of automatic alignment by controlling the hydro-mechanical steering system; **characterized by** comprising:
- one right front inductive sensor (30) and one left front inductive sensor(30') which are assembled on the front steering center (13),
- one right rear inductive sensor (40) and one left rear inductive sensor (40'), which are assembled on the rear steering center (23), and
• a wired or wireless remote control (70) with a light warning, which provides commands to perform left steering, right steering, and automatic alignment functions by working connectedly with the electric control circuit (60);
further **characterized in that** the electronic control circuit (60) controls the hydro-mechanical steering system in accordance with the signals received from the mentioned inductive sensors (30, 30', 40, 40').

2. It is an automatic alignment system suitable for claim 1, and its feature is that the mentioned tower direction of rotation detection part (11) has a right extension (111) sensed by the right front inductive sensor (30), and a left extension (112) sensed by the left front inductive sensor (30') when the tower (A) and the trailer (B) are aligned.

3. It is an automatic alignment system suitable for claim 1, and its feature is that the mentioned wheel direction of steering detection part (21) is in semi lunar form.

4. It is an automatic alignment system suitable for claim 1, and its feature is that it contains a right indication lamp (50) receiving signal front the right front inductive sensor (30), and a left indication lamp (50') receiving signal from the left front inductive sensor (30'), and that these right indication lamp (50) and left indication lamp (50') are on when the tower (A) and the trailer (B) are aligned.

5. It is an automatic alignment system suitable for claim 1, and its feature is that the remote control (70) contains a right steering button (71) for sending command signal for right steering, and a left steering button (72) for sending command signal for the left steering to the electric control circuit (60).

6. It is an automatic alignment system suitable for Claim 1, and its feature is that the remote control (70) contains an automatic alignment button (73) for sending command signal to the electric control circuit (60) for starting the automatic alignment process.

7. It is an automatic alignment system suitable for claim 1, and its feature is that the remote control (70) contains an emergency stop button (74) for sending command signal to the electric control circuit (60) for deactivating all electrical steering functions.

8. It is an automatic alignment system suitable for claim 1, and its feature is that on the remote control (70) contains a right rear sensor lamp (75) communicating with the right rear inductive sensor (40), and a left sensor lamp (76) communicating with the left rear inductive sensor (40') for showing the steering direction again, and that these right sensor lamp (75) and left sensor lamp (76) are on when the wheels are aligned.

9. It is a method that provide the automatic alignment structuring with the system mentioned in claim 1, and its **characterized by** comprising;
- Transmittance of the automatic alignment command given by the remote control (70) to the electric control circuit(60),
- Control of the right front inductive sensor (30) and left front inductive sensor (30') in order that electrical control circuit (60) detects the angle between the tower (A) and the trailer (B),
- Detection of the fact that the angle between the tower (A) and the trailer (B) is zero, meaning that the tower (A) and the trailer (B) are aligned if both right front inductive sensor (30) and left front inductive sensor (30') detect the tower direction of rotation detection part (11),
- Control of right rear inductive sensor (40) and left rear inductive sensor (40') in order that the steered direction of the electric control circuit (60) is detected,
- Control of the hydraulic system in order that the electric control circuit (60) detects the steering direction by detecting the inductive sensor (40, 40') detecting the wheel steering direction detection part (21), and that a steering towards the direction of other inductive sensor (40, 40') is performed,
- That the electric control circuit (60) maintains the steering action until the right rear inductive sensor (40) and left rear inductive sensor (40') are both active,
- that the electric control circuit (60) stops the alignment action until the right rear inductive sensor (40) and left rear inductive sensor (40') are both active process steps.

10. It is an automatic alignment method suitable for claim 9, and its feature is that as a result of the tower direction of rotation detection part (11) rotating towards the same direction with the tower (A) when the tower (A) maneuver towards a direction;
- Tower direction of rotation detection part (11) leaves the sensing area of the right front inductive sensor (30) and the left front inductive sensor (30'), Right indication lamp (50) connected to the right front inductive sensor (30), and left indication lamp (50') connected to the left front inductive sensor (30') go off.

11. It is an automatic alignment method suitable for claim 10, ant its feature is that, in order to align the tower (A) and the trailer (B);
- The tower (A) is maneuvered towards the opposite direction of the previous maneuver direction by the driver,
- Tower direction detection part (11) rotating towards the same direction as the tower (A),
- Right indication lamp (50) and left indication lamp (50') go on when the tower direction detection part (11) enter the sensing area of the right front inductive sensor (30) and the left front inductive sensor (30'),
- And the termination of the alignment process by the driver when both indication lamps (50, 50') are on.

12. It is an automatic alignment method suitable to claim 9, and its feature is that, as a result of the steering direction detection part (21) rotating towards the same direction as the wheels when the wheels rotate to a direction;
- Wheel direction of steering detection part (21) leaves the sensing area of either right rear inductive sensor (40) or the left rear inductive sensor (40') based on the wheel rotation direction,
- Electric control circuit (60) powers the sensor lamp (75, 76) related with the sensing inductive sensor (40, 40').

13. lt is an automatic alignment method suitable for claim 12, and its feature is that, in the automatic alignment process;
- wheels are steered towards the opposite direction of the previous steering direction by the electric control circuit (60),
- Wheel direction of steering detection part (21) rotating towards the same direction as the wheels,
- And automatic alignment process stops when the wheel steering detection part (21) enters the sensing area of inductive sensor of the rotation direction (40, 40').

14. It is an automatic alignment method suitable for claim 12, and its feature is that the electric control circuit (60) powers the right sensor lamp (75) and the left sensor lamp (76) when the right rear inductive sensor (40) and the left rear inductive sensor (40') sense the wheel direction of steering detection part (21).

## Patentansprüche

1. Automatisches Ausrichtungssystem zur Steuerung des Winkels zwischen dem Turm (A) / Anhänger (B) und dem Drehweg der Räder, um die Leistung des automatischen Ausrichtungsverfahrens in Übereinstimmung mit diesen Steuerungen in Fahrzeugen zu gewährleisten, die in Schwerlastwagen verwendet werden, und die eine mechanischen Lenksystem haben,
• ein Turmdrehrichtungserkennungsteil (11), das mit dem vorderen Lenkzentrum (13) verbunden ist, so dass es sich entsprechend der Lenkwirkung des Turms (A) in Bezug auf den Anhänger (B) bewegt, und zwar wenn der Turm (A) und der Anhänger (B) ausgerichtet sind, wird es von dem rechten induktiven Vordersensor (30) und dem linken vorderen induktiven Sensor (30 ') erfaßt,
• eine Radrichtung des Lenkungserkennungsteils (21), die mit der hinteren Lenkmitte (23) verbunden ist, so dass es sich gemäß der Lenkwirkung der Hinterräder bewegt, und dass, wenn die Hinterräder ausgerichtet sind, es erfasst wird durch den rechten hinteren induktiven Sensor (40) und den linken hinteren induktiven Sensor (40 '), und wenn Räder in eine Richtung gelenkt werden, wird dies durch den induktiven Sensor der Lenkrichtung (40, 40') erfasst,
und
• eine elektronische Steuerschaltung (60), die die automatische Ausrichtung durch Steuerung des hydromechanischen Lenksystems ermöglicht! **gekennzeichnet durch**:
- ein rechter vorderer induktiver Sensor (30) und ein linker vorderer induktiver Sensor (30'), die auf dem vorderen Lenkzentrum montiert sind (13),
- ein rechter hinterer Induktivsensor (40) und ein linker hinterer induktiver Sensor (40'), die an dem hinteren Lenkzentrum montiert sind (23), und
• eine drahtgebundene oder drahtlose Fernsteuerung (70) mit einer Lichtwarnung, die Befehle zum Ausführen von Linkslenken, Rechtslenken und automatischen Ausrichtungsfunktionen durch Arbeiten in Verbindung mit der elektrischen Steuerschaltung (60) bereitstellt; **dadurch gekennzeichnet, dass** die elektronische Steuerschaltung (60) das hydromechanische Lenksystem in Übereinstimmung mit den Signalen steuert, die von den erwähnten induktiven Sensoren (30, 30', 40, 40') empfangen werden.

2. Es ist ein automatisches Ausrichtungssystem, geeignet für Anspruch 1, und sein Merkmal ist, dass der erwähnte Turmdrehrichtungs-Erfassungsteil (11) eine vom rechten vorderen induktiven Sensor (30) erfasste rechte Verlängerung (111) und eine linke Verlängerung (112) durch den linken vorderen induktiven Sensor (30 ') abgetastet, wenn der Turm (A) und der Anhänger (B) ausgerichtet sind.

3. Es ist ein automatisches Ausrichtungssystem, geeignet für Anspruch 1, und sein Merkmal besteht darin, dass die erwähnte Radrichtung des Lenkungserfassungsteils (21) halbmondförmig ist.

4. Es ist ein automatisches Ausrichtungssystem,geeignet für Anspruch 1, und sein Merkmal ist, dass es eine rechte Anzeigelampe (50) enthält, die ein Signal von dem rechten vorderen induktiven Sensor (30) und ein linkes Anzeigelämpchen (50 ') von dem linken vorderen induktiven Sensor (30 ')empfängt , und diese rechte Anzeigelampe (50) und linke Anzeigelampe (50') an sind wenn der Turm (A) und der Anhänger (B) ausgerichtet sind.

5. Es ist ein automatisches Ausrichtungssystem, geeignet für Anspruch 1, und sein Merkmal besteht darin, dass die Fernsteuerung (70) einen rechten Lenkknopf (71) zum Senden eines Befehlssignals zum Rechtslenken und einen linken Lenkknopf (72) zum Senden Befehlssignal für die linke Lenkung an die elektrische Steuerschaltung (60) enthält.

6. Es ist ein automatisches Ausrichtungssystem, geeignet für Anspruch 1, und sein Merkmal besteht darin, dass die Fernbedienung (70) einen automatischen Ausrichtungsknopf (73) zum Senden eines Befehlssignals an die elektrische Steuerschaltung (60) zum Starten des automatischen Ausrichtprozesses enthält.

7. Es ist ein automatisches Ausrichtungssystem, geeignet für Anspruch 1, und sein Merkmal besteht darin, dass die Fernsteuerung (70) einen Notausschalter (74) enthält zum Senden eines Befehlssignals an die elektrische Steuerschaltung (60) zum Deaktivieren aller elektrischen Steuerfunktionen.

8. Es ist ein automatisches Ausrichtungssystem, geeignet für Anspruch 1, und sein Merkmal besteht darin, dass an der Fernbedienung (70) eine rechte hintere Sensorlampe (75), die mit dem rechten hinteren induktiven Sensor (40) kommuniziert, und eine linke Sensorlampe (76) die mit dem linken hinteren induktiven Sensor (40 ') kommuniziert um die Lenkrichtung erneut zu zeigen, und dass diese rechte Sensorlampe (75) und die linke Sensorlampe (76) eingeschaltet sind, wenn die Räder ausgerichtet sind.

9. Es ist ein Verfahren, das die automatische Ausrichtungsstrukturierung mit dem in Anspruch 1 genannten System bereitstellt, und ist **dadurch gekennzeichnet** und umfasst;
- Übertragung des automatischen Ausrichtungsbefehls, der von der Fernbedienung (70) an die elektrische Steuerschaltung (60) gegeben wird,
- Steuerung des rechten vorderen induktiven Sensors (30) und des linken vorderen induktiven Sensors (30 '), damit die elektrische Steuerschaltung (60) den Winkel zwischen dem Turm (A) und dem Anhänger (B) erkennt,
- Erkennung der Tatsache, dass der Winkel zwischen dem Turm (A) und dem Anhänger (B) Null ist, was bedeutet, dass der Turm (A) und der Anhänger (B) ausgerichtet sind, wenn sowohl der rechte vordere induktive Sensor (30) als auch der linke vorne sind Induktiver Sensor (30 ') den Turmdrehrichtungserkennungsteil (11) detektiert,
- Steuerung des rechten hinteren induktiven Sensors (40) und des linken hinteren induktiven Sensors (40'), damit die Lenkrichtung der elektrischen Steuerschaltung (60) detektiert wird,
- Steuerung des Hydrauliksystems, damit die elektrische Steuerschaltung (60) die Lenkrichtung erfasst, indem sie den induktiven Sensor (40, 40') detektiert, der den Radlenkrichtungs-Erfassungsteil (21) erfasst, und dass eine Lenkung in Richtung der Lenkrichtung erfolgt ein anderer induktiver Sensor (40, 40 ') wird durchgeführt,
- dass die elektrische Steuerschaltung (60) den Lenkvorgang beibehält, bis der rechte hintere induktive Sensor (40) und der linke hintere induktive Sensor (40 ') beide aktiv sind,
- dass die elektrische Steuerschaltung (60) den Ausrichtvorgang stoppt, bis der rechte hintere induktive Sensor (40) und der linke hintere induktive Sensor (40 ') beide aktive Prozessschritte sind.

10. Es ist ein automatisches Ausrichtungsverfahren, das für Anspruch 9 geeignet ist, und sein Merkmal besteht darin, dass infolge des Turmdrehrichtungserfassungsteils (11) sich mit dem Turm (A) in die gleiche Richtung dreht, wenn der Turm (A) in eine Richtung manövriert;
- Turmdrehrichtungserfassungsteil (11) verlässt den Erfassungsbereich des rechten vorderen induktiven Sensors (30) und des linken vorderen induktiven Sensors (30 '), rechte Anzeigelampe (50) die mit dem rechten vorderen induktiven Sensor (30) verbunden und die linke Anzeigelampe (50 '), die mit dem linken vorderen induktiven Sensor (30') verbunden ist, erlischen

11. Es ist ein automatisches Ausrichtungsverfahren, das für Anspruch 10 geeignet ist, und sein Merkmal um den Turm (A) und den Anhänger (B) auszurichten ist, dass;
- Der Turm (A) wird vom Fahrer in die entgegengesetzte Richtung der vorherigen Manöverrichtung bewegt,
- Turmrichtungsdetektionsteil (11), der sich in die gleiche Richtung wie der Turm (A) dreht,
- Die rechte Anzeigelampe (50) und die linke Anzeigelampe (50 ') gehen an, wenn der Turmrichtungs-Erfassungsteil (11) in den Erfassungsbereich des rechten vorderen induktiven Sensors (30) und des linken vorderen induktiven Sensors (30') eintritt.
- und die Beendigung des Ausrichtvorgangs durch den Fahrer, wenn beide Anzeigelampen (50, 50 ') an sind.

12. Es ist ein automatisches Ausrichtungsverfahren, das für Anspruch 9 geeignet ist, und sein Merkmal besteht darin, dass sich der Lenkrichtungsdetektionsteil (21) in die gleiche Richtung wie die Räder dreht, wenn sich die Räder in eine Richtung drehen;
- Die Radrichtung des Lenkungserkennungsteils (21) verlässt den Erfassungsbereich entweder des rechten hinteren induktiven Sensors (40) oder des linken hinteren induktiven Sensors (40 ') basierend auf der Raddrehrichtung,
- Die elektrische Steuerschaltung (60) versorgt die Sensorlampe (75, 76) bezogen mit dem induktiven Sensor (40, 40 ').

13. Es ist ein automatisches Ausrichtungsverfahren, das für Anspruch 12 geeignet ist, und sein Merkmal ist das bei dem automatischen Ausrichtungsverfahren;
- Räder werden durch die elektrische Steuerschaltung (60) in die entgegengesetzte Richtung der vorherigen Lenkrichtung gelenkt.,
- Die Richtung des Lenkungserkennungsteils (21) dreht sich in die gleiche Richtung wie die Räder,
- Und der automatische Ausrichtungsprozess stoppt, wenn der Radlenkungsdetektionsteil (21) in den Erfassungsbereich des induktiven Sensors der Rotationsrichtung (40, 40 ') eintritt.

14. Es ist ein automatisches Ausrichtungsverfahren, das für Anspruch 12 geeignet ist, und sein Merkmal ist, dass die elektrische Steuerschaltung (60) die rechte Sensorlampe (75) und die linke Sensorlampe (76) antreibt, wenn der rechte hintere induktive Sensor (40) und der linker hinterer induktiver Sensor (40 ') die Radrichtung des Lenkungserkennungsteils (21) erfasst.

## Revendications

1. Système d'alignement automatique fournissant des contrôles de l'angle entre la tour (A) / la remorque (B) et le sens de rotation des roues, assurant la performance du processus d'alignement automatique conformément à ces contrôles dans les véhicules utilisés pour le transport de charges lourdes, et ayant un système de direction hydromécanique,
• une partie de détection du sens de rotation de la tour (11), qui est reliée au centre de direction avant (13) pour qu'elle se déplace selon la direction de la tour (A) par rapport à la remorque (B) et qu'elle soit détectée par le capteur inductif avant droit (30) et le capteur inductif avant gauche (30') lorsque la tour (A) et la remorque (B) sont alignées,
• une partie de détection du sens de direction de la roue (21), qui est reliée au centre de direction arrière (23) pour qu'elle se déplace en fonction de la direction des roues arrière et qu'elle soit détectée par le capteur inductif arrière droit (40) et le capteur inductif arrière gauche (40') lorsque les roues arrière sont alignées et par le capteur inductif du sens de rotation (40, 40') lorsque les roues sont dirigées dans une direction,
et
• un circuit de commande électronique (60) qui assure la performance d'alignement automatique en commandant le système de direction hydromécanique, **caractérisé par** ;
- un capteur inductif avant droit (30) et un capteur inductif avant gauche (30') qui sont assemblés sur le centre de direction avant (13),
- un capteur inductif arrière droit (40) et un capteur inductif arrière gauche (40'), qui sont assemblés sur le centre de direction arrière (23), et
• une télécommande filaire ou sans fil (70) avec un voyant lumineux, qui fournit des commandes pour effectuer des fonctions de direction à gauche, de direction à droite et d'alignement automatique en travaillant en liaison avec le circuit de commande électrique (60); **caractérisée en outre en ce que** le circuit de commande électronique (60) commande le système de direction hydromécanique en fonction des signaux reçus des capteurs inductifs mentionnés (30, 30', 40, 40').

2. Il s'agit d'un système d'alignement automatique adapté à la revendication 1 et sa caractéristique est que la partie de détection du sens de rotation de la tour mentionnée (11) a une extension droite (111) détectée par le capteur inductif avant droit (30) et une extension gauche (112) détectée par le capteur inductif avant gauche (30') lorsque la tour (A) et la remorque (B) sont alignées.

3. Il s'agit d'un système d'alignement automatique adapté à la revendication 1, et sa caractéristique est que la partie de détection du sens de direction de la roue mentionnée (21) a une forme semi-lunaire.

4. Il s'agit d'un système d'alignement automatique adapté à la revendication 1, **caractérisé en ce qu'**il contient un témoin lumineux droit (50) recevant le signal du capteur inductif avant droit (30) et un témoin lumineux gauche (50') recevant le signal du capteur inductif avant gauche (30') et que ces témoins lumineux droit (50) et gauche (50') sont allumés lorsque la tour (A) et la remorque (B) sont alignées.

5. Il s'agit d'un système d'alignement automatique adapté à la revendication 1, **caractérisé en ce que** la télécommande (70) contient un bouton de direction droit (71) pour envoyer un signal de commande pour la direction droite et un bouton de direction gauche (72) pour envoyer un signal de commande pour la direction gauche vers le circuit de commande électrique (60).

6. Il s'agit d'un système d'alignement automatique adapté à la revendication 1, **caractérisé en ce que** la télécommande (70) contient un bouton d'alignement automatique (73) pour envoyer un signal de commande au circuit de commande électrique (60) pour démarrer le processus d'alignement automatique.

7. Il s'agit d'un système d'alignement automatique adapté à la revendication 1, **caractérisé en ce que** la télécommande (70) contient un bouton d'arrêt d'urgence (74) pour envoyer un signal de commande au circuit de commande électrique (60) pour désactiver toutes les fonctions de direction électrique.

8. Il s'agit d'un système d'alignement automatique adapté à la revendication 1, **caractérisé en ce que** la télécommande (70) contient une lampe de capteur arrière droite (75) communiquant avec le capteur inductif arrière droit (40) et une lampe de capteur gauche (76) communiquant avec le capteur inductif arrière gauche (40') pour montrer de nouveau le sens de direction et que ces lampes de capteur droit (75) et gauche (76) sont allumées lorsque les roues sont alignées.

9. Il s'agit d'une méthode qui fournit la structure d'alignement automatique avec le système mentionné dans la revendication 1 et elle est **caractérisée par** ;
- Transmittance de la commande d'alignement automatique envoyée par la télécommande (70) au circuit de la commande électrique (60),
- Commande du capteur inductif avant droit (30) et du capteur inductif avant gauche (30') afin que le circuit de commande électrique (60) détecte l'angle entre la tour (A) et la remorque (B),
- Détection du fait que l'angle entre la tour (A) et la remorque (B) est nul, ce qui signifie que la tour (A) et la remorque (B) sont alignées si le capteur inductif avant droit (30) et le capteur inductif avant gauche (30') détectent la partie de détection du sens de rotation de la tour (11),
- Commande du capteur inductif arrière droit (40) et du capteur inductif arrière gauche (40') pour détecter la direction du circuit de commande électrique (60),
- Commande du système hydraulique afin que le circuit de commande électrique (60) détecte le sens de direction en détectant le capteur inductif (40, 40') qui détecte la partie de détection du sens de direction de la roue (21) et afin qu'une direction est réalisée vers le sens de l'autre capteur inductif (40, 40'),
- Le fait que le circuit de commande électrique (60) maintient l'action de direction jusqu'à ce que le capteur inductif arrière droit (40) et le capteur inductif arrière gauche (40') soient tous les deux actifs,
- Le fait que le circuit de commande électrique (60) arrête l'action d'alignement jusqu'à ce que le capteur inductif arrière droit (40) et le capteur inductif arrière gauche (40') soient tous les deux des étapes actives du procédé.

10. Il s'agit d'une méthode d'alignement automatique adaptée à la revendication 9, **caractérisée en ce que** la partie de détection du sens de rotation de la tour (11) tourne dans le même sens que la tour (A) lorsque la tour (A) manoeuvre vers une direction ;
- La partie de détection du sens de rotation de la tour (11) quitte la zone de détection du capteur inductif avant droit (30) et du capteur inductif avant gauche (30'),
- Le témoin lumineux droit (50) connecté au capteur inductif avant droit (30) et le témoin lumineux gauche (50') connecté au capteur inductif avant gauche (30') s'éteignent.

11. Il s'agit d'une méthode d'alignement automatique adaptée à la revendication 10 et sa caractéristique est que, afin d'aligner la tour (A) et la remorque (B) ;
- La tour (A) est manoeuvrée dans le sens inverse de la direction de manoeuvre précédente par le conducteur,
- La partie de détection du sens de rotation de la tour (11) tourne dans le même sens que la tour (A),
- Le témoin lumineux droit (50) et le témoin lumineux gauche (50') s'allument lorsque la partie de détection du sens de rotation de la tour (11) pénètre dans la zone de détection du capteur inductif avant droit (30) et du capteur inductif avant gauche (30'),
- Et la fin du processus d'alignement par le conducteur lorsque les deux témoins lumineux (50, 50') sont allumés.

12. Il s'agit d'une méthode d'alignement automatique adaptée à la revendication 9 et sa caractéristique est que, en conséquence de la partie de détection du sens de direction (21) tournant dans la même direction que les roues lorsque les roues tournent dans une direction ;
- La partie de détection du sens de direction de la roue (21) quitte la zone de détection du capteur inductif arrière droit (40) ou du capteur inductif arrière gauche (40') en fonction du sens de rotation de la roue,
- Le circuit de commande électrique (60) alimente la lampe du capteur (75, 76) associée au capteur inductif de détection (40, 40').

13. Il s'agit d'une méthode d'alignement automatique adaptée à la revendication 12 et sa caractéristique est que, dans le processus d'alignement automatique ;
- Les roues sont orientées dans le sens opposé au sens de la direction précédente par le circuit de commande électrique (60),
- La partie de détection du sens de direction de la roue (21) tourne dans le même sens que les roues,
- Et le processus d'alignement automatique s'arrête lorsque la partie de détection du sens de direction de la roue (21) pénètre dans la zone de détection du capteur inductif de la direction de rotation (40, 40').

14. Il s'agit d'une méthode d'alignement automatique adaptée à la revendication 12 et sa caractéristique est que le circuit de commande électrique (60) alimente la lampe de capteur droite (75) et la lampe de capteur gauche (76) lorsque le capteur inductif arrière droit (40) et le capteur inductif arrière gauche (40') détectent la partie de détection du sens de direction de la roue (21).
